# EUROPEAN PATENT SPECIFICATION

(11) **EP 2 380 224 B1**
(45) Date of publication and mention of the grant of the patent: **27.03.2013**
(21) Application number: 09806151.8
(22) Date of filing: 09.12.2009
(51) Int. Cl.: H01M 2/10, H01M 10/50, H01M 10/42

(54) **ELECTRIC BATTERY MODULE WITH TEMPERATURE CONTROL**
ELEKTRISCHES BATTERIEMODUL MIT TEMPERATURKONTROLLE
MODULE DE BATTERIE AVEC CONTRÔLE DE TEMPÉRATURE

(30) Priority: 16.12.2008 PL 38682208
(43) Date of publication of application: 26.10.2011
(73) Proprietor: Impact Clean Power Technology Spólka Akcyjna, 00-640 Warszawa (PL)
(72) Inventor: CIOSEK, Marcin Pawel, PL-59-800 Luba (PL); KRAS, Bartlomiej Stefan, PL-05-820 Piastów (PL)
(74) Representative: Chlebicka, Lidia
(86) International application number: PCT/PL2009/050039
(87) International publication number: WO 2010/071463

(56) References cited:
- DE-A1-102007 011 026
- DE-C1- 10 114 960
- US-A1- 2007 122 695

## Description

An object of this invention is a thermo-stabilized module comprising electric batteries to be used in stationary and mobile electrical devices, especially in cars with an electrical or hybrid driving unit.

Electric battery packs used in electric cars comprise a number of cells connected into modules. In order to generate a desired voltage, amperage or battery energy capacity, the cells are electrically connected in series, parallel or combinations of both, i.e. a series-parallel system, and the cells are stacked up to take as little space as possible. To fit an electric car with the biggest possible passenger cabin and boot, the space allocated to modules of batteries should be minimized. On the other hand, operating (discharging) as well as charging batteries generate substantial amount of thermal energy, and, therefore, the temperature value of said modules has to be controlled. In order to take up the smallest amount of space the cells have to be stacked up very tightly, while in order to control temperature suitable heat transfer channels between particular cells of a battery pack should be provided - this, however, calls for more space for battery packs. These two demands had to be realized in the state of the art by mutually contradictory technical solutions.

From the patent specification EP1753058 a module of electrical batteries is known having air flow channels between cells in a battery. The battery is cooled by means of ribbed separators with openings through which a cooling medium can flow.

From the patent specification US4314008 a thermo-stabilizing system for a battery module is known, in which a set of electric cells can be heated or cooled depending on needs. To this end, thermo-stabilized electric batteries are located in an insulating housing and work together with a heat pump which, depending on actual thermal conditions, transfers heat into or out of a battery. As a heat pump a Peltier cell is used having two parallel planes between which heat is conducted. This Peltier cell makes contact, on one side, through an intermediary thermo-conducting block, with a battery pack, and on the other side, directly with a radiator, which is a closure of the insulating housing. By switching polarization and voltage of current flowing to the Peltier cell, desired cooling or heating of a battery is achieved and, in effect, better operating parameters and a longer life-span of electric cells are achieved as well.

From patent specification DE 101 14 960 there is known a battery housing construction wherein battery cells are stood on shelves, the shelves being in thermal contact with Peltier cell which transfers the heat out or into the interior of the housing in order to cool or heat the cells, depending on the needs. Moreover, the known device comprises a channel heat exchanger with a fan, which adjoins the side wall of the housing.

It is an object of this invention to construct a battery module to enable thermo-stabilization of flat battery cells without a substantial increase of battery modules' storage space, and which is easy to assemble and provides an effective heat transmission.

An additional object of this invention is to construct means for fastening a Peltier cell that makes it easy to assemble said Peltier cell in housings of battery cell packs. According to the invention the flat battery cells in a thermo-stabilized electric batteries' module are located inside a housing and remain in thermal contact with a Peltier cell, said contact providing the heat transfer from or to said pack of flat battery cells. The solution is characterized in that thermally conductive separating plates which remain in contact with at least one side wall of the housing are placed inside the housing with the flat battery cells placed between said separating plates, whereas said side wall of the housing contacting with the separating plates is in a thermal contact with the Peltier cell and the flat battery cells are clamped by the thermally conductive plates with their largest faces, while the Peltier cell remains in thermal contact with a liquid heat exchanger, said exchanger preferably having a radiator as well as a cooling fluid collector having outlet and inlet openings.

It is also advantageous when the Peltier cell and the liquid heat exchanger are placed in a positioning frame and pressed through a fastening plate essentially to the middle part of the side wall of the housing by means of double-sided screws.

In another advantageous embodiment, the flat battery cells placed in the housing and separated by the separating plates are clamped together by means of double-sided screws.

Advantageously, the separating plates have their back edges bent at an angle of 90° contacting with the side wall and they are riveted together with said side wall of the housing.

In an advantageous solution the separating plates and the side wall of the housing are made of aluminum.

An object of this invention is shown in exemplary embodiments in a drawing in which
Fig. 1 presents a section of a housing for flat battery cells, as well as a Peltier cell and a liquid heat exchanger;
Fig. 2 presents a section of the liquid heat exchanger;
Fig. 3 presents the liquid heat exchanger in an exploded perspective view;
Fig. 4 presents a section of the electric batteries module;
Fig. 5 presents a perspective view of the housing with the flat battery cells partially protruding and with the liquid heat exchanger in an exploded view;
Fig. 6 presents a side wall of the housing;
Fig. 7 presents a separating plate of the housing;
Fig. 8 presents the base plate of the housing; and
Fig. 9 presents the cover plate of the housing.

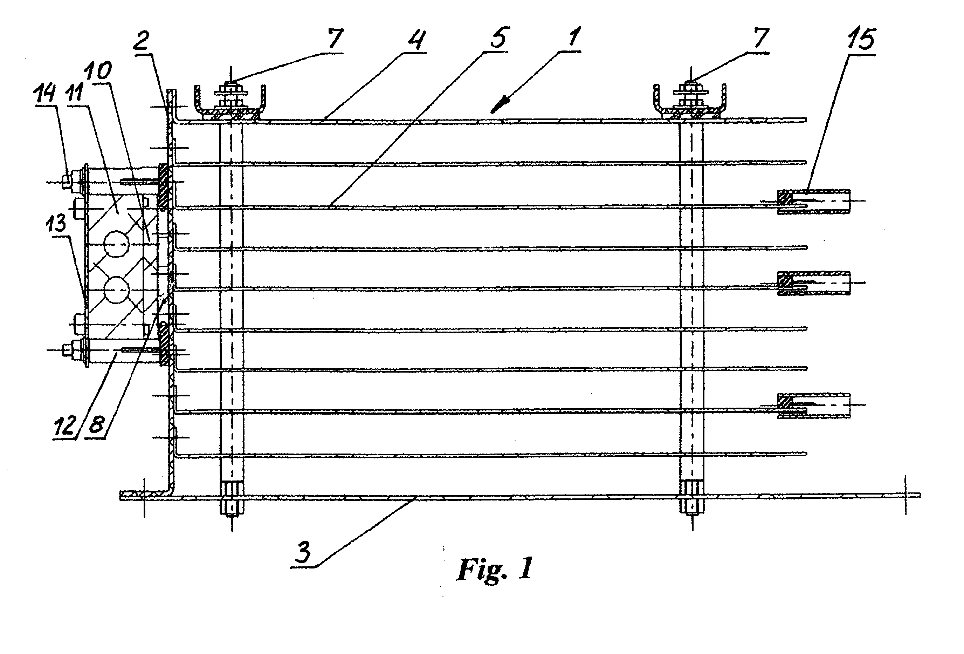

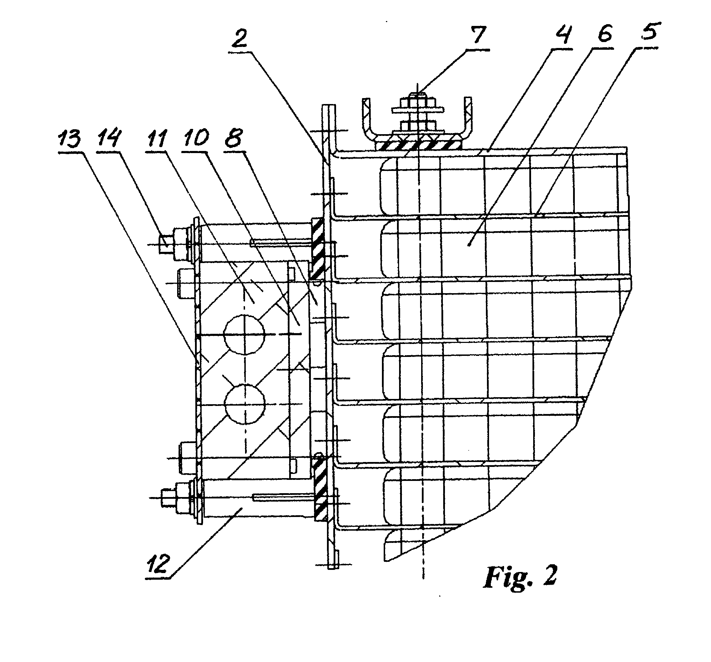

In the embodiment shown in Fig. 1 the housing 1 of the module comprising flat battery cells 6 has, according to the invention, a side wall 2 connected to a base plate 3 and to a cover plate 4. Eight parallel separating plates 5 with the flat battery cells 6 shown in Fig. 2 located between said separating plates are placed between the base plate 3 and the cover plate 4, wherein the outermost bottom flat battery cell 6 is located in the area between the bottom separating plate 5 and the base plate 3 and the outermost upper flat battery cell 6 is located in the area between the upper separating plate 5 and the cover plate 4.

In order to provide a thermal contact between plates connected to the side wail 2 of the housing 1 the separating plates 5 and the cover plate 4, as well as the base plate 3 are connected to the side wall 2 by means of riveting. Riveting provides a two-way clamp for effective heat transfer between the connected plates. The effectiveness of the heat transfer between the aluminum side wall 2 and the aluminum separating plates 5 has been further increased through the application of thermo-conducting paste, which is applied onto mutually contacting surfaces of plates to be riveted.

Moreover, the base plate 3 and the cover plate 4 are connected to each other by means of four double-sided screws 7. The flat battery cells 6 stacked up inside the housing 1 and separated by means of the separating plates 5 are clamped between adjacent plates by means of the double-sided screws 7, which makes the whole surface of a cell touch tightly to the appropriate heat-conducting plate. Heat transfer is significantly increased after applying thermo-conducting paste onto surfaces where the cells 6 are in contact with the separating plates 5.

One surface of a Peltier cell 8 is pressed against the outer surface of the aluminum side wall 2, and the second surface pressed against a liquid heat exchanger 9 comprising a radiator 10 and a cooling fluid manifold 11 with inlet and outlet openings. The abovementioned liquid heat exchanger 9 is located in a positioning frame 12 and is pressed against the Peltier cell 8 through a fastening plate 13 by means of double-sided screws 14 driven into the side wall 2.

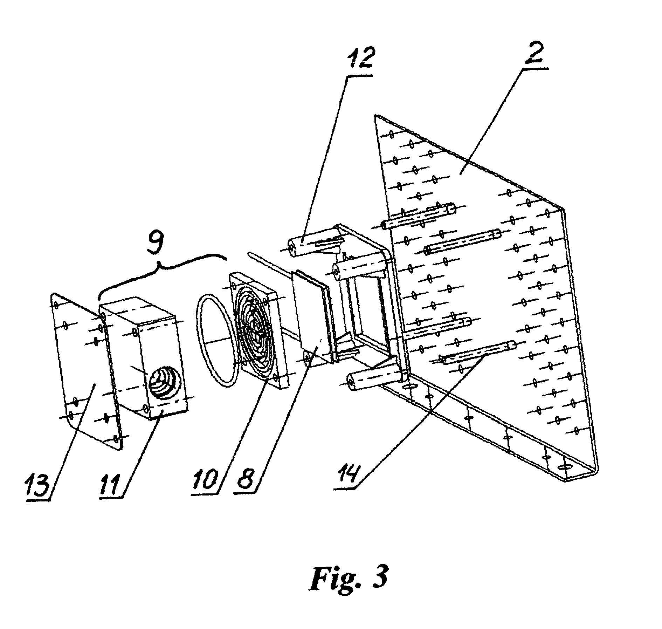

Fig. 3 is a detailed, exploded perspective view of the liquid heat exchanger 9. The double-sided screws 14 are driven in the middle part of the side plate 2 with the positioning frame 12, having a square opening, positioning the Peltier cell 8, which is in contact with the radiator 10 connected tightly by means of a sealing ring to the collector 11. In order to provide a better heat transfer a layer of thermo-conducting paste is applied between the back plate and the Peltier cell 8 contacting with it, as well as between the Peltier cell 8 and the heat exchanger 9 contacting with it.

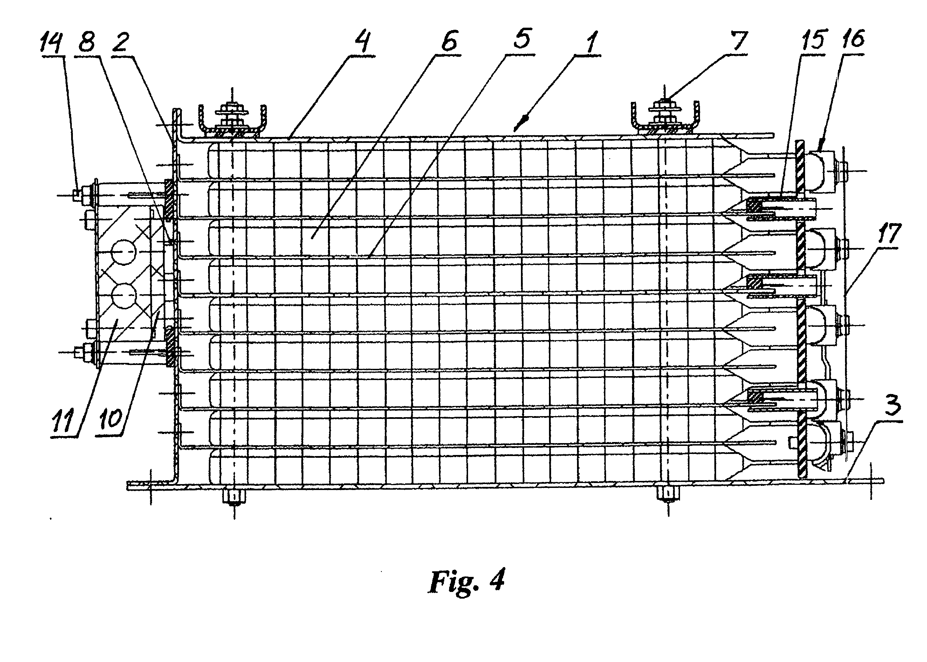

A whole module of electric batteries according to this invention shown in Fig. 4 comprises the housing 1 in which the flat battery cells 6 are clamped between the separating plates 5. The Peltier cell 8 contacting with the heat exchanger is fastened from one side to the side wall 2 of the housing 1, and from the other side temperature sensors 15 are visible, which are located near connectors of poles of the cells 16 together with a plate 17 comprising an electronic assembly taking the voltage from all the flat battery cells 6, said plate being connected to a battery control system.

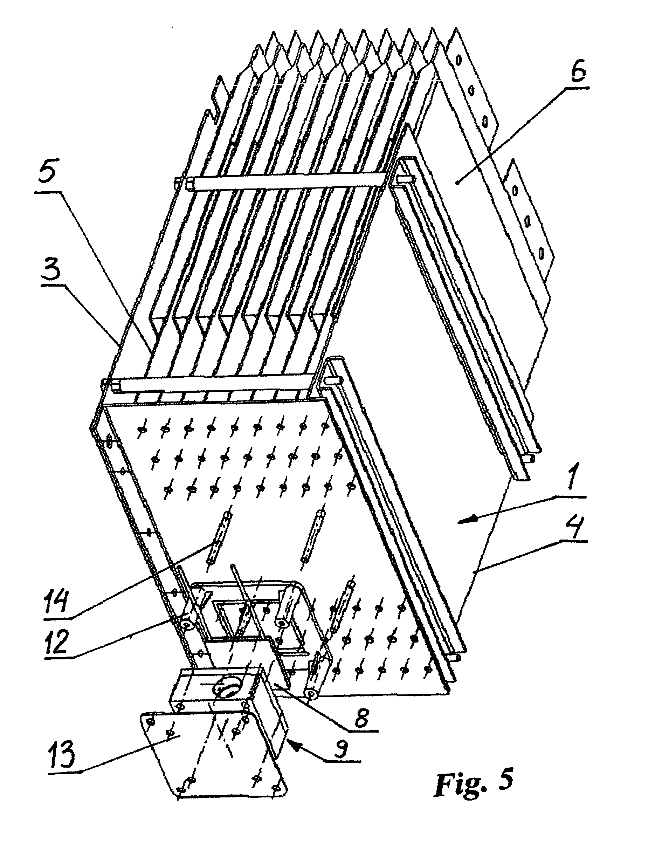

Pre-assembly, perspective view of module components according to the invention is shown in Fig. 5, with nine flat battery cells 6 partially protruding from the housing 1 and an exploded view of the liquid heat exchanger 9 with the Peltier cell 8.

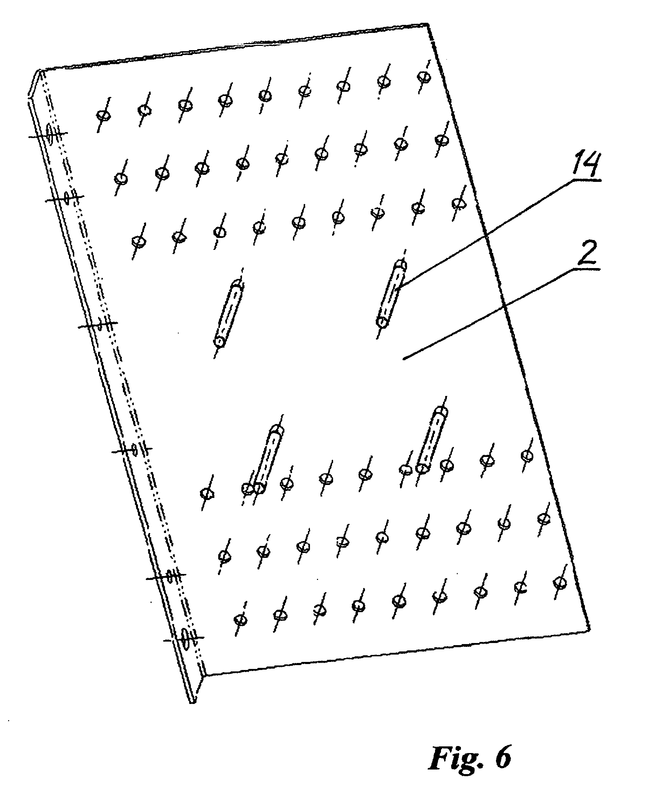

As it is shown in Fig. 6, four double-sided screws 14 are driven into the middle part of the side wall 2, and in its sides fifty four openings are made for rivets fastening eight separating plates 5 and the cover plate 4, while the lower part of the side wall 2 designed to be connected with the base plate is bent at an angle of 90°.

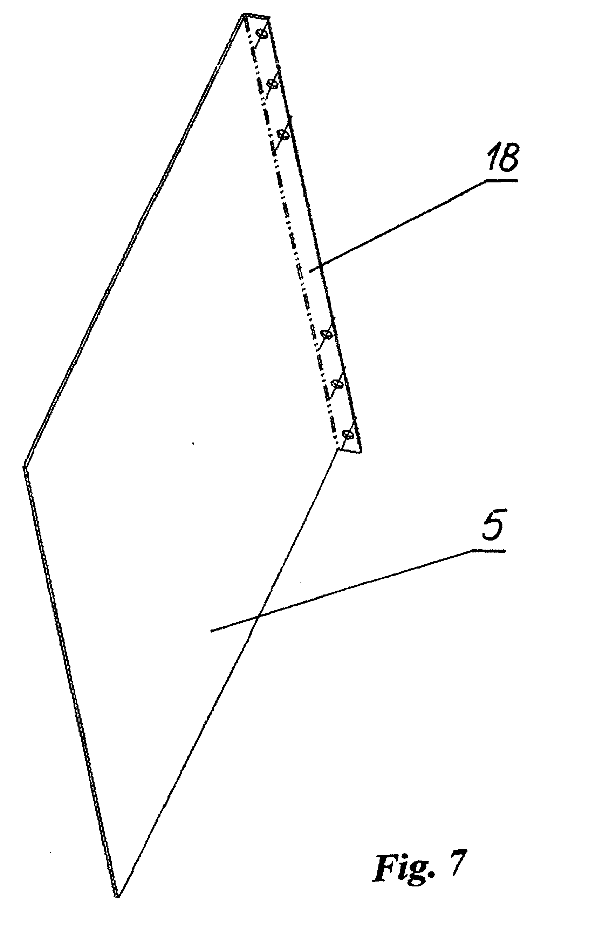

The shape of the separating plate 5 is shown in Fig. 7. The separating plate 5 has its back edge 18 bent at an angle of 90° with openings for rivets made in it. Because each of the separating plates 5 placed in the housing 1 has its back edge 18 contacting with the back wall 2 and is riveted to it the effectiveness of the heat exchange between connected plates depends mainly on their contact surface; thus, the back edge 18 should be the highest possible, but due to construction reasons this height has to be less then the height of the flat battery cell 6 to be stacked up onto the separating plate 5.

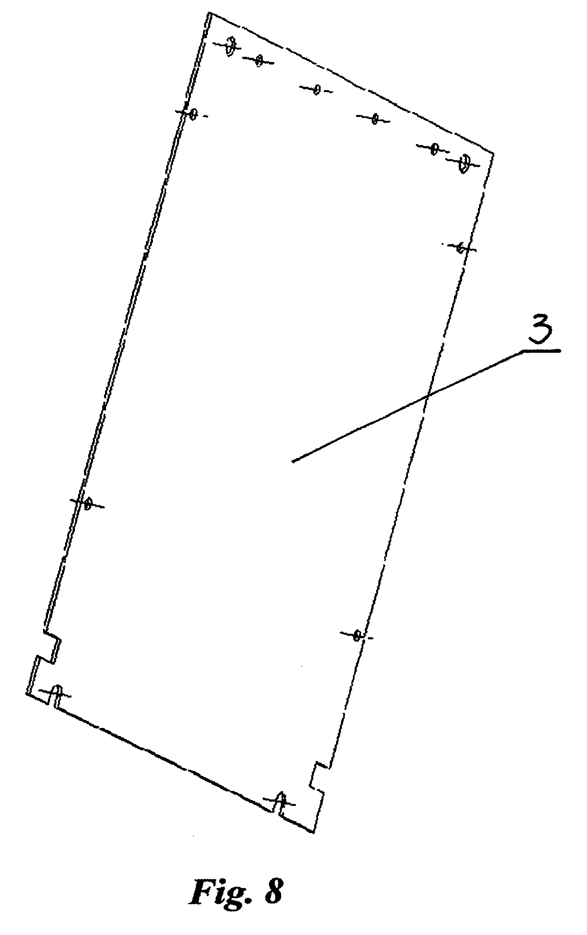

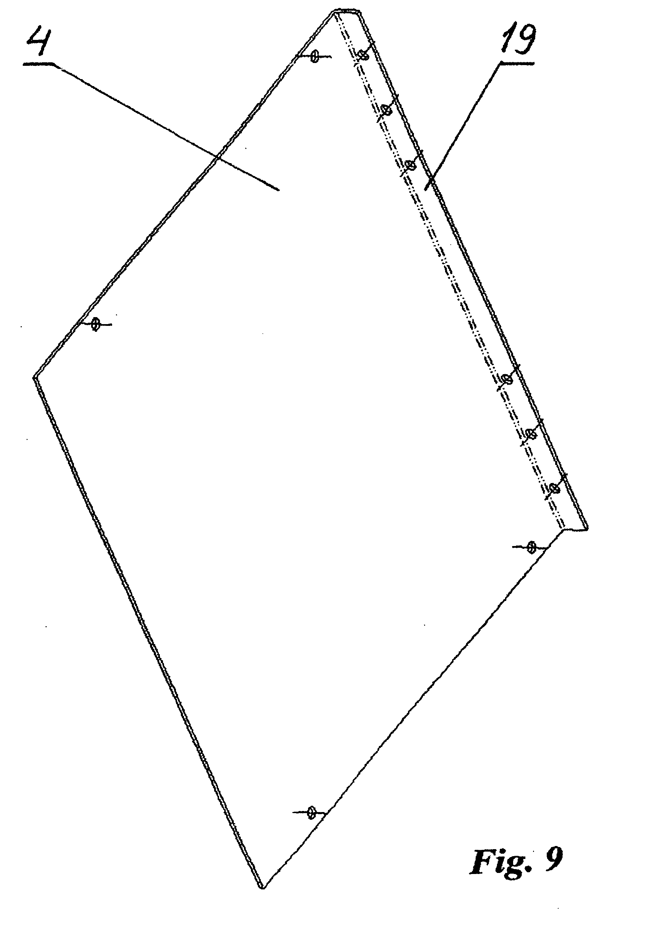

As shown in Fig. 8, the base plate 3 of the housing 1 is made in shape of a flat metal sheet element with mounting holes for the double-sided screw 7, whereas the cover plate 4 illustrated in Fig. 9 apart from openings for the double-side screws 7 has also its rear edge 19 bent at an angle of 90° with opening for rivets made in it.

Based on whether the electrical battery module requires cooling or heating, the battery control system gives instructions to change voltage polarization of the Peltier cell 8. A temperature threshold for a signal to start cooling is set at 25°C, and to start heating - at 0°C.

Depending on a real temperature value indicated by the temperature sensors 15 supply parameters of the Peltier cell 8, that is a voltage polarization and an amperage value, are dynamically set in the voltage range of -12 V to +12 V, and in the amperage range of - 6 A to + 6 A. The side wall 2 together with the separating plates 5 connected with it, the base plate 3 and the cover plate 4, and in effect each of the flat battery cells 6 placed between said plates in the housing are in effect cooled or heated depending on a polarization of a voltage to the Peltier cell 8 in the module according to the invention.

## Claims

1. A thermo-stabilized electrical battery module in which flat battery cells (6) are placed inside a housing (1) and are in thermal contact with a Peltier cell (8) transferring heat from or to a battery cell pack, **characterized in that** thermally conductive separating plates (5) which remain in contact with at least one side wall (2) of the housing (1) are placed inside the housing (1) with the flat battery cells (6) placed between said separating plates (5), whereas said side wall (2) of the housing (1) contacting with the separating plates (5) is in a thermal contact with the Peltier cell (8) and the flat battery cells (6) are clamped by the thermally conductive plates (5) with their largest faces, while the Peltier cell (8) is in thermal contact with a liquid heat exchanger (9).

2. A module according to claim 1, **characterized by** that the liquid heat exchanger (9) comprises a radiator (10) and a cooling fluid collector (11) with inlet and outlet openings.

3. A module according to claim 1, **characterized by** that the Peltier cell (8) together with the liquid heat exchanger (9) are placed in a positioning frame (12) and are pressed by means of double-sided screws (14) through a fastening plate (13) essentially against a middle part of the side wall (2) of the housing (1).

4. A module according to claim 1, **characterized by** that the flat battery cells (6) placed in the housing (1) and separated by the separating plates (5) are clamped together by means of double sided screws (7).

5. A module according to claim 1, **characterized by** that the separating plates (5) have their back edges (18) bent at an angle of 90° contacting with the side wall (2).

6. A module according to claim 5, **characterized by** that the separating plates (5) are riveted together with the side wall (2) of the housing (1).

7. A module according to claim 1, **characterized by** that the separating plates (5), as well as the side wall (2) of the housing (1) are made of aluminum.

## Patentansprüche

1. Wärmestabilisiertes elektrisches Batterie-Modul, in dem flache Batterie-Zellen (6) in einem Gehäuse (1) angeordnet sind und mit einer Peltier-Zelle (8), die Wärme von einer Batterie-Zellen-Einheit ab oder zu einer Batterie-Zellen-Einheit hin leitet, in thermischem Kontakt stehen, **dadurch gekennzeichnet, dass** wärmeleitende Trennplatten (5), die mit zumindest einer Seitenwand (2) des Gehäuses (1) in Kontakt stehen, in dem Gehäuse (1) angeordnet sind, wobei die flachen Batterie-Zellen (6) zwischen den Trennplatten (5) angeordnet sind, wohingegen die Seitenwand (2) des Gehäuses (1), die mit den Trennplatten (5) in Kontakt steht, in thermischem Kontakt mit der Peltier-Zelle (8) steht, und die flachen Batterie-Zellen (6) durch die wärmeleitenden Platten (5) mit deren größten Seiten eingespannt sind, während die Peltier-Zelle (8) in thermischem Kontakt mit einem Flüssigkeits-Wärmetauscher (9) steht.

2. Modul gemäß Anspruch 1, **dadurch gekennzeichnet, dass** der Flüssigkeits-Wärmetauscher (9) einen Radiator (10) sowie einen Kühlflüssigkeits-Sammelbehälter (11) mit Einlass- und Auslassöffnungen umfasst.

3. Modul gemäß Anspruch 1, **dadurch gekennzeichnet, dass** die Peltier-Zelle (8) zusammen mit dem Flüssigkeits-Wärmetauscher (9) in einem Positionierrahmen (12) angeordnet sind und mit Hilfe von doppelseitigen Schrauben (14) durch eine Befestigungsplatte (13) im Wesentlichen gegen einen Mittelteil der Seitenwand (2) des Gehäuses (1) gedrückt werden.

4. Modul gemäß Anspruch 1, **dadurch gekennzeichnet, dass** die in dem Gehäuse (1) angeordneten und durch die Trennplatten (5) voneinander getrennten flachen Batterie-Zellen (6) durch doppelseitige Schrauben (7) zusammengeklemmt sind.

5. Modul gemäß Anspruch 1, **dadurch gekennzeichnet, dass** die Trennplatten (5) rückwärtige Kanten (18) aufweisen, die unter Bildung eines 90°-Winkels abgewinkelt sind und mit der Seitenwand (2) in Kontakt stehen.

6. Modul gemäß Anspruch 5, **dadurch gekennzeichnet, dass** die Trennplatten (5) mit der Seitenwand (2) des Gehäuses (1) vernietet sind.

7. Modul gemäß Anspruch 1, **dadurch gekennzeichnet, dass** sowohl die Trennplatten (5) als auch die Seitenwand (2) des Gehäuses (1) aus Aluminium hergestellt sind.

## Revendications

1. Module de batterie électrique thermostabilisé dans lequel des cellules de batterie plates (6) sont placées à l'intérieur d'un boîtier (1) et sont en contact thermique avec une cellule à effet Peltier (8) transférant de la chaleur depuis ou vers un bloc de cellules de batterie, **caractérisé par le fait que** des plaques de séparation thermoconductrices (5) qui restent en contact avec au moins une paroi latérale (2) du boîtier (1) sont placées à l'intérieur du boîtier (1) avec les cellules de batterie plates (6) placées entre lesdites plaques de séparation (5), tandis que ladite paroi latérale (2) du boîtier (1) en contact avec les plaques de séparation (5) est en contact thermique avec la cellule à effet Peltier (8) et les cellules de batterie plates (6) sont serrées par les plaques thermoconductrices (5) avec leurs faces les plus grandes, tandis que la cellule à effet Peltier (8) est en contact thermique avec un échangeur thermique liquide (9).

2. Module selon la revendication 1, **caractérisé par le fait que** l'échangeur thermique liquide (9) comprend un radiateur (10) et un collecteur de fluide de refroidissement (11) ayant des ouvertures d'entrée et de sortie.

3. Module selon la revendication 1, **caractérisé par le fait que** la cellule à effet Peltier (8) conjointement avec l'échangeur thermique liquide (9) sont placés dans un cadre de positionnement (12) et sont pressés au moyen de vis double face (14) à travers une plaque de fixation (13) essentiellement contre une partie intermédiaire de la paroi latérale (2) du boîtier (1).

4. Module selon la revendication 1, **caractérisé par le fait que** les cellules électriques (6) placées dans le boîtier (1) et séparées par les plaques de séparation (5) sont serrées ensemble au moyen de vis double face (7).

5. Module selon la revendication 1, **caractérisé par le fait que** les plaques de séparation (5) ont leurs bords arrières (18) courbés à un angle de 90° en contact avec la paroi latérale (2).

6. Module selon la revendication 5, **caractérisé par le fait que** les plaques de séparation (5) sont rivetées ensemble avec la paroi latérale (2) du boîtier (1).

7. Module selon la revendication 1, **caractérisé par le fait que** les plaques de séparation (5), ainsi que la paroi latérale (2) du boîtier (1) sont faites d'aluminium.
